# EUROPÄISCHE PATENTSCHRIFT

(11) **EP 3 867 484 B1**
(45) Veröffentlichungstag und Bekanntmachung des Hinweises auf die Patenterteilung: **20.05.2026**
(21) Anmeldenummer: 19769744.4
(22) Anmeldetag: 11.09.2019
(51) Int. Cl.: E21B 7/24, E21B 10/02, E21B 17/04, E21B 25/00, E21B 25/06, F24T 10/13, F24T 10/00

(54) **VERFAHREN UND VORRICHTUNG ZUM RÜCKBAU VON ERDWÄRMESONDEN**
METHOD AND DEVICE FOR DISMANTLING GEOTHERMAL PROBES
PROCÉDÉ ET DISPOSITIF DE DÉMANTÈLEMENT DE SONDES GÉOTHERMIQUES

(30) Priorität: 18.10.2018 DE 102018125947
(43) Veröffentlichungstag der Anmeldung: 25.08.2021
(73) Patentinhaber: BTR Bohrtechnik Rosswag GmbH & Co. KG, 71665 Vaihingen/Enz-Horrheim (DE)
(72) Erfinder: MARQUARDT, Georg, 97437 Haßfurt (DE); RAPP, Jens, 71665 Vaihingen/Enz (DE); WILKE, Holger, 97753 Karlstadt (DE)
(74) Vertreter: Fleck, Hermann-Josef
(86) Internationale Anmeldenummer: PCT/EP2019/074230
(87) Internationale Veröffentlichungsnummer: WO 2020/078623

(56) Entgegenhaltungen:
- EP-A1- 2 444 587
- EP-B1- 2 444 587
- DE-T2- 602004 011 775
- US-B2- 9 234 399

## Beschreibung

Die Erfindung bezieht sich auf ein Verfahren zum Rückbau von Erdwärmesonden, bei dem ein Sondenkörper aus Sondenleitung und verfestigter Dämmerfüllung mittels einer Bohrvorrichtung unter Zuführung von Spülflüssigkeit überbohrt wird, welche einen über einen Bohrkopf rotierend vorgetriebenen Bohrstrang mit einem rohrförmigen zylindrischen Bohrgestänge und mit einer an dessen in Bohrrichtung liegendem Endbereich angebrachten Bohrkrone umfasst, sowie auf eine Bohrvorrichtung zum Überbohren von Erdwärmesonden mit einem Bohrkopf, der eine Antriebsvorrichtung mit einem Drehantrieb aufweist, an den ein Bohrgestänge eines Bohrstrangs angeschlossen ist, welcher an seinem in Richtung der Bohrachse liegenden endseitigen Abschnitt mit einer Bohrkrone versehen ist, und mit einer Spüleinrichtung zum Austragen von Bohrklein und Unterstützung des Bohrprozesses.

Der Rückbau von Erdwärmesonden nach einem solchen Verfahren ist in der DE 10 2016 103 166 A1 im Zusammenhang mit einem Sensorsystem zur räumlichen Verlaufsmessung eines Bohrlochs mit einer eingebrachten Erdwärmesonde erwähnt. Dort ist vorgeschlagen, mit der Kenntnis des Sondenverlaufs mittels Richtbohrtechnik den Rückbau von Erdwärmesonden durchzuführen. Diese Vorgehensweise erfordert einen entsprechend hohen Aufwand.

Es sind auch (ohne vorhandenen schriftlichen Nachweis) Verfahren zum Rückbau von Erdwärmesonden bekannt, bei denen der Sondenkörper mit Verfüllung und Sondenleitung großkalibrig umbohrt wird. Diese stehen im Zusammenhang mit größerkalibrigen Brunnenrückbauarbeiten. Da das geringer kalibrige Bohrloch für die Erdwärmesonde jedoch über seine Länge von z. B. 80 oder 100 m erhebliche Abweichungen von der Lotrechten von bis zu mehreren Metern haben kann - deutlich mehr als bei Brunnen - ist auch mit der traditionellen Methode des großkalibrigen Überbohrens fast unmöglich nicht sicher gewährleistet, dass der Sondenkörper über seine gesamte Länge erfasst wird. Dies ist unter anderem auch bedingt dadurch, dass wegen des relativ großen Durchmessers, das Überbohrgestänge für die Krümmung des Sondenbohrloches zu starr ist.

Auf verschiedene Probleme beim Einbau von Erdwärmesonden ist in der DE 10 2014 2006 042 B4, der WO 2011/015342 A1, der WO 2011/015341 A1 und der DE 10 2007 033 436 A1 hingewiesen, wobei unter anderem eine mangelhafte Ausführung der Bohrlochverfüllung und eine hydraulische Verbindung zum Grundwasser angesprochen sind.

In der Richtlinie VDI 4640 Blatt 2 "Thermische Nutzung des Untergrundes - Erdgekoppelte Wärmepumpenanlage" aus dem Jahr 2001 ist für die Stilllegung angegeben, dass die Erdwärmesonde im Untergrund verbleibt und mit einer Zementsuspension verfüllt wird. Für den Fall, dass das Sondenmaterial nicht den Anforderungen entspricht, muss die Sonde entfernt werden. In dem Gründruck der Richtlinie vom 1. Mai 2015 wird bei Schadensfällen der Rückbau der Erdwärmesonde gefordert. Eine standardisierte Technik zum Rückbau von Erdwärmesonden existiert derzeit nicht.

In dem Vortrag "Rückbau einer nicht fachgerecht abgedichteten Erdwärmesonde durch Überbohren mit einem neu entwickelten Bohrverfahren", veröffentlicht am 16. September 2015, in dem auch auf die vorgenannte Richtlinie VDI 4640 Blatt 2 hingewiesen ist, ist vorgeschlagen, in die Erdwärmesonden-Rohre Stahlseile einzuzementieren.

In der DE 10 2016 103 166 A1 ist ein Sensorsystem und ein Verfahren zur räumlichen Verlaufsmessung eines Bohrlochs, insbesondere einer Erdwärmesonde, offenbart.

Wie Schadensfälle der jüngeren Vergangenheit zeigen, bestehen Abdichtungsprobleme meist im Ringraum der Erdwärmesonde und es wird erforderlich, diesen dicht und dauerhaft wieder zu verfüllen. Bisher sind noch keine Verfahren zum zuverlässigen Überbohren von Erdwärmesonden und Entfernen derselben technisch zuverlässig entwickelt.

Die DE 60 2004 011775 T2 zeigt ein Bohrverfahren und eine Bohrvorrichtung zur Installation von Erdwärmesonden, wobei ein Schallbohrkopf verwendet wird, um Material, das durch das Bohren bewegt wird, in einen Ringraum des Bohrrohres zu zwingen.

Die EP 2 444 587 A1 zeigt einen Vibrationsantrieb zum Erzeugen einer Vibration an einem Bohrgestänge.

Die US 9 234 399 B2 zeigt eine Bohrvorrichtung mit Bohrgestänge und bezieht sich näher auf eine besondere Ausbildung der Bohrkrone.

Der vorliegenden Erfindung liegt die Aufgabe zugrunde, ein Verfahren und eine Bohrvorrichtung zum Rückbau von Erdwärmesonden bereitzustellen, mit dem beziehungsweise mit der ein möglichst zuverlässiger Rückbau erreichbar ist.

Diese Aufgabe wird für das Verfahren mit der im Anspruch 1 genannten Vorgehensweise gelöst. Hierbei ist vorgesehen, dass der mit der Bohrkrone versehene endseitige Abschnitt des Bohrstrangs ohne oder in geringem Abstand im Millimeter- oder Zentimeterbereich (insbesondere 0 - 20 mm) von dem Sondenkörper oder in Kontakt mit dem Sondenkörper - diesen umfangsseitig in Richtung der momentanen Bohrachse zumindest teilweise übergreifend - rotierend vorgetrieben wird.

Bezüglich der Bohrvorrichtung wird die Aufgabe mit den im Anspruch 11 genannten Merkmalen gelöst. Hierbei ist vorgesehen, dass das Bohrgestänge zumindest nahe der Bohrkrone in einem, der Bohrkrone zugekehrten, Abschnitt mit einem flexiblen Rohrabschnitt versehen ist, an dessen in Richtung der Bohrachse liegendem Endbereich die Bohrkrone angeschlossen ist, und dass die Bohrkrone in Richtung der Bohrachse trichterförmig erweitert ist. Der Ausdruck "zumindest" bedeutet, dass das Bohrgestänge auch überwiegend oder insgesamt flexibel genug ausgebildet sein kann, um dem gegebenenfalls gekrümmten Sondenverlauf zu folgen.

Im Anspruch 5 ist eine Anwendung einer Bohrvorrichtung beim Rückbau einer Erdwärmesonde angegeben, mit der die Aufgabe ebenfalls gelöst wird.

Mit dem genannten Verfahren, der Anwendung beziehungsweise der Bohrvorrichtung, wird der Sondenkörper beim Überbohren zuverlässig auch in gekrümmten, von einer Geraden abweichenden Bereichen zuverlässig nachverfolgt und kann z. B. abschnittsweise herausgezogen werden, wie sich in aufwendigen Untersuchungen der Erfinder gezeigt hat. Der Sondenkörper mit Verfüllstoffinjektionsleitung und verfestigter Verfüllung kann z. B. stückweise unter reduzierter beziehungsweise abgestellter Zufuhr von Spülflüssigkeit und einer dadurch erhöhten Reibung abgedreht und gezogen werden.

Erfindungsgemäß besteht für die Nachführung beim Überbohren im Zusammenhang mit dem Überbohren eine funktionswichtige Vorgehensweise darin, dass die Bohrkrone beim Bohren während der Rotation über das Bohrgestänge in Bohrachsrichtung in Vibration versetzt wird.

Hierbei besteht eine vorteilhafte Maßnahme darin, dass die Vibrationsfrequenz im Bereich von 50 Hz bis 200 Hz liegt.

Für die passive Nachführung bei der Überbohrung ist ferner vorteilhaft vorgesehen, dass die Bohrkrone dem Sondenkörper über das in sich genügend flexibel ausgebildete Bohrgestänge nachgeführt wird. Erfindungsgemäß ist dazu zumindest im unteren Bereich des Bohrgestänges ein flexibler Rohrabschnitt eingebunden. Der flexible Rohrabschnitt ist dabei flexibler als der sich gegebenenfalls zum Bohrkopf hin anschließende Rohrabschnitt, wobei beide Rohrabschnitte z. B. aus auf die Anforderungen beim Bohren abgestimmten Stählen hergestellt sind. Der flexible Rohrabschnitt besitzt z. B. eine Länge von einigen Metern, vorzugsweise im Bereich von 2 bis 8 m.

Weitere vorteilhafte Maßnahmen für die Durchführung des Verfahrens bestehen darin, dass die Rotationsgeschwindigkeit und die Vortriebskraft auf die Beschaffenheit des Gebirges, des Sondenkörpers, insbesondere der Dämmerfüllung und auch der Sondenleitung, abgestimmt sind. Hierbei kann die Rotationsgeschwindigkeit zusätzlich noch auf die Vibrationsfrequenz abgestimmt werden, beziehungsweise die Vibrationsfrequenz in Abhängigkeit von der Rotationsgeschwindigkeit gewählt werden.

Bei der Anwendung der Bohrvorrichtung für das Überbohren des Sondenkörpers ist erfindungsgemäß vorgesehen, dass die Antriebsvorrichtung zusätzlich einen Vibratorteil aufweist, mittels dessen die Bohrkrone während ihrer Rotation über das Bohrgestänge mit in Richtung der Bohrachse wirkenden Vibrationen beaufschlagbar ist beziehungsweise beaufschlagt wird, deren Vibrationsfrequenz im Bereich von 50 Hz bis 200 Hz liegt. Die Amplitude der Vibration in axialer Richtung beträgt z. B. einige mm bis einige cm. Die Vibration mindert die Mantelreibung zwischen der Innenwand des Bohrgestänges und den Sondenrohren bzw. der Sondenleitung samt umgebender Dämmerfüllung, so dass ein Verdrillen des Sondenkörpers vermieden wird. Ein Verdrillen würde zu einer Blockage im Inneren des Überbohrgestänges führen. Ein weiterer Vortrieb wäre dann nicht möglich.

Auch bei der Anwendung besteht eine vorteilhafte Maßnahme darin, dass das Bohrgestänge zumindest in einem der Bohrkrone zugekehrten Abschnitt mit einem flexiblen Rohrabschnitt versehen ist, über den die Nachführung auch in gekrümmten Bereichen des Sondenkörpers in dessen Längsrichtung sichergestellt ist. Für die passive Nachführung sind des Weiteren die Maßnahmen von Vorteil, dass der endseitige Abschnitt des Bohrstrangs, insbesondere die Bohrkrone, in Richtung der Bohrachse erweitert ist.

Weitere Vorteile für das Überbohren ergeben sich dadurch, dass die Bohrkrone stirnseitig und auf ihrer inneren Mantelfläche mit in Richtung der Bohrachse vorstehenden Bohrzähnen versehen ist.

Die erfindungsgemäße Ausgestaltung der Bohrvorrichtung für das Überbohren besteht darin, dass die Antriebsvorrichtung mit einem Vibratorteil versehen ist, über den der Bohrstrang während seiner Rotation in Bohrachsrichtung in Vibration versetzbar ist. Die Vibrationsfrequenz und Amplitude sind dabei vorzugsweise in den vorstehend angegebenen Bereichen vorgegeben beziehungsweise vorgebbar.

Eine für das Überbohren weitere vorteilhafte Maßnahme besteht darin, dass die Innenumfangsfläche der Bohrkrone mit in Bohrachsrichtung vorstehenden Bohrzähnen versehen ist.

Die Erfindung wird nachfolgend anhand von Ausführungsbeispielen unter Bezugnahme auf die Zeichnungen näher erläutert. Es zeigen:
- Fig. 1: eine schematische seitliche Schnittansicht eines Überbohrvorgangs einer Erdwärmesonde mittels einer Bohrvorrichtung und

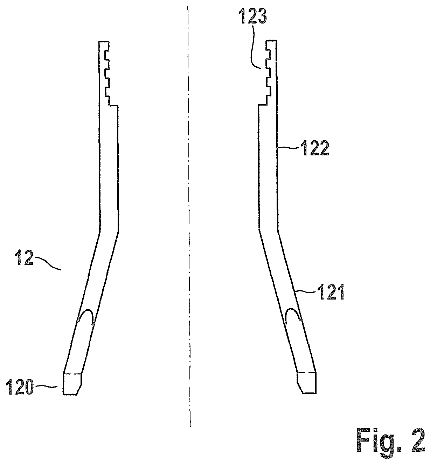

- Fig. 2: eine seitliche Schnittansicht einer Bohrkrone.

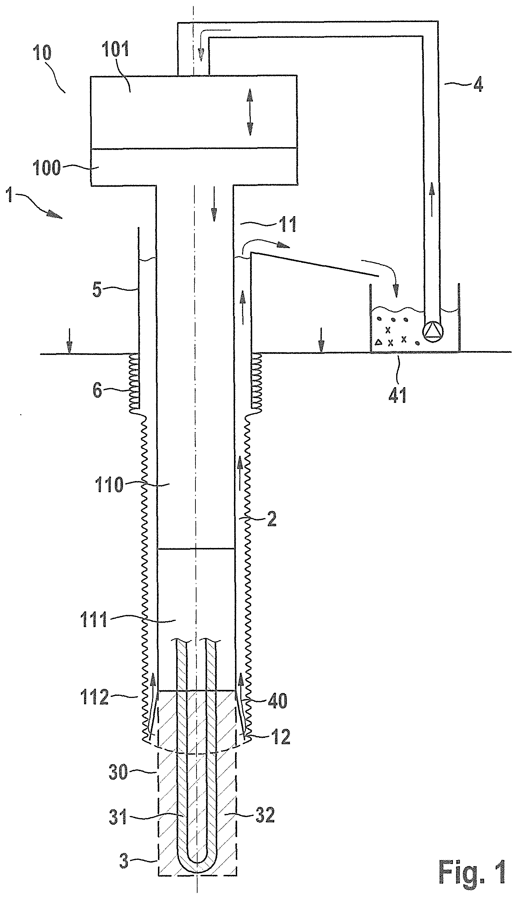

Fig. 1 zeigt schematisch wesentliche Komponenten einer Bohrvorrichtung 1 beim Rückbau einer Erdwärmesonde 3 durch Überbohren des Sondenkörpers 30, der eine in einer verfestigten Dämmerfüllung 32 eingebettete U-förmige (oder gegebenenfalls auch andere, wie konzentrische) Sondenleitung 31 umfasst. Die Dämmerfüllung 31 füllt dabei den Raum zwischen der Bohrlochwandung eines ursprünglichen Sondenbohrlochs und der Sondenleitung 31 aus, um insbesondere auch eine gute Wärmeübertragung aus dem umgebenden Erdreich in das in der Sondenleitung 31 zirkulierende Wärmeträgerfluid herzustellen.

Die Bohrvorrichtung 1 weist einen über der Erdoberfläche liegenden Bohrkopf 10 auf, der einen Drehantrieb mit bohraxialer Vibration100 umfasst, an den ein Bohrstrang 13 rotierend antreibbar angeschlossen ist. Der Bohrstrang 13 weist ein mit den Drehantrieb 100 verbundenes Bohrgestänge 11 mit einem hohlen, zylinderförmigen Bohrrohr 110 auf, welches in seinem von dem Bohrkopf 10 abgelegenen unteren Bereich in einen ebenfalls hohlen zylinderförmigen, jedoch relativ zu dem darüber liegenden Abschnitt des Bohrrohrs 110 flexiblen Rohrabschnitt 111 übergeht. Sowohl der flexible Rohrabschnitt 111 als auch der darüber liegende, mit dem Drehantrieb 100 gekoppelte Abschnitt des Bohrrohrs 110 sind z. B. aus einem für derartige Bohrungen geeigneten Stahl ausgebildet, wobei der flexible Rohrabschnitt 111 entsprechend elastische beziehungsweise flexiblere Eigenschaften besitzt und etwa eine Länge von einigen Metern, z. B. zwischen zwei und acht Metern, aufweist. Am in Bohrrichtung weisenden unteren Ende des flexiblen Rohrabschnitts 111 ist eine Bohrkrone 12 angeschlossen, mittels deren der Materialabtrag beim Herstellen des Bohrlochs 2 beim Überbohren erfolgt, wozu die Bohrkrone 12 mit geeigneten, in Bohrrichtung vorstehenden Bohrzähnen 120 versehen ist. Die Bohrkrone 12 bildet für sich oder zusammen mit einem daran anschließenden Teil des Bohrrohrs 110 beziehungsweise des flexiblen Rohrabschnitts 111 einen endseitigen Abschnitt 112 des Bohrstrangs 13. Die Bohrkrone 12 ist über einen Koppelabschnitt 122 mit Verbindungsmitteln 123, wie ineinandergreifenden Gewinden, an dem Bohrrohr 110, insbesondere dem flexiblen Rohrabschnitt 111 angebracht.

Zum Austragen des bei der Bohrung anfallenden Bohrkleins sowie zum Verringern von Reibungseinflüssen bei der Bohrung und Verbessern des Bohrvorgangs ist eine Spüleinrichtung 4 zum Zu- und Abführen von Spülflüssigkeit vorgesehen. Die Spülflüssigkeit wird dabei im Kreis durch das Bohrgestänge 11 nach unten bis in den Bereich der Bohrkrone 12 geführt und durch diese, insbesondere durch in deren Endbereich angeordnete Öffnungen, seitlich ausgeleitet und zwischen der Außenfläche des Bohrrohrs und der Bohrungswand wieder nach oben in eine auf der Erdoberfläche angeordnete Spülwanne 41 zum Klären der Bohrspülung geführt. Aus der Spülwanne 41 wird dann die Spülflüssigkeit über eine Pumpe und eine Leitungsanordnung wieder in das Bohrrohr 110 und dort nach unten geführt, um einen Spülkreislauf zu bilden.

Zur Eindämmung der Verwilderung des obersten Bereiches des Bohrlochs 2 ist in die Erde um das Bohrloch 2, umlaufend beabstandet von dem Bohrgestänge 11, ein die Erdoberfläche überragendes, oben offenes Standrohr 5 eingesetzt und umfangsseitig nach außen zum Erdreich hin mittels einer Tondichtung 6 abgedichtet.

In eingehenden Untersuchungen der Erfinder hat sich herausgestellt, dass für ein zuverlässiges Überbohren des Sondenkörpers 30 über dessen gesamte Länge eine Anpassung des Durchmessers beziehungsweise Umfangs des Bohrstrangs 13 an den Durchmesser beziehungsweise den Umfang des Sondenkörpers 30 wesentlich ist, so dass die Bohrkrone 12 mit dem anschließenden Bohrgestänge 11 von dem Sondenkörper 30, insbesondere der verfestigten Dämmerfüllung 32 und der nicht immer zentral darin verlaufenden, gegebenenfalls randseitigen Sondenleitung 31 zuverlässig beim Überbohren geführt wird, insbesondere unter Berücksichtigung des Umstands, dass die ursprüngliche Sondenbohrung und daher der Sondenkörper 30 von einer Lotrechten beziehungsweise geraden Erstreckung erheblich (um mehrere Meter) abweichen kann. Das an den Durchmesser des Sondenkörpers 30 weitgehend angepasste und daher schlanke Bohrgestänge 11 ist im Gegensatz zu einem großkalibrigen Überbohrgestänge in der Lage, dem Sondenkörper 30, durch diesen passiv geführt, über seine gesamte Länge zu folgen. Wie sich in näheren Untersuchungen der Erfinder gezeigt hat, ist hierfür das sich im in Bohrrichtung endseitigen Bereich des Bohrgestänges 11 beziehungsweise Bohrrohrs 110 über mehrere Meter erstreckende Flexrohr in Form des flexiblen Rohrabschnitts 111 von wesentlichem Vorteil. Der flexible Rohrabschnitt 111, der flexibler ist als herkömmlicherweise verwendete Bohrrohre, kann sich alternativ auch über die gesamte Länge des Bohrrohres 110 erstrecken.

Darüber hinaus hat sich erfindungsgemäß herausgestellt, dass eine Ausrüstung des Bohrkopfs 10 mit einem Vibratorteil 101 für die passive Führung durch den Sondenkörper 30 beim Überbohren wesentliche Bedeutung hat. Der Vibratorteil 101 des Bohrkopfs 10 bewirkt in Richtung der momentanen Bohrachse (Bohrachsrichtung) während der Drehung des Bohrstrangs 13 Vibrationen. Dadurch wird die Reibung zwischen dem rotiernden Umbohrstrang und der stehenden, weil im Gebirge fixierten, Erdwärmesonde entscheidend gemindert. Vorteilhaft liegt dabei die Vibratorfrequenz im Bereich von 50 Hz bis 200 Hz und kann im Einzelfall auf die Materialbeschaffenheit des Gebirges, des Sondenkörpers 30 mit der Dämmerfüllung 32 und der Sondenleitung 31 sowie auch in Abhängigkeit von der Rotationsgeschwindigkeit abgestimmt sein, um ein optimales Überbohrergebnis zu erhalten. Die Amplitude der Vibrationen liegen dabei z. B. im Bereich eines oder einiger Zentimeter, wie z. B. 0,5 cm und 5 cm, insbesondere von 1 cm bis 3 cm.

Als weitere vorteilhafte Maßnahme für das Verfahren und die Bohrvorrichtung 1 zum Überbohren von Erdwärmesonden hat sich herausgestellt, dass für die passive Führung entlang des Sondenkörpers 30 eine Erweiterung der Bohrkrone 12 zu deren stirnseitigem Ende hin wesentliche Vorteile bietet. Die Erweiterung insbesondere des Innenumfangs der Bohrkrone 12 kann dabei in axialer Richtung stufig oder zumindest teilweise konisch mit einem konischen Abschnitt 121 oder gekrümmt beziehungsweise trichterförmig verlaufen und hat insbesondere im Zusammenhang mit der Vibration eine zentrierende Wirkung bezüglich des Sondenkörpers 30. Dabei kann die Innenumfangsfläche der Bohrkrone 12 mit in axialer Richtung vorstehenden Bohrzähnen versehen sein. Die äußere Form der Bohrzähne ist dabei vorteilhaft an das abzutragende Material angepasst, so sind z.B. die bohrachsial außenstehenden Zähne scharfkantig und dadurch abrasiver gegenüber der tonhaltige Dämmerfüllung 32.Bohrachsial innenstehende Zähne sind dagegen gerundet um die PE-Rohrleitungen, die zur Führung des Bohrstranges erforderlich sind, zu schonen. So führt die äußere Form der Bohrzähne in der Bohrkrone 12 zuvorteilhaften Effekten beim Überbohren. Die Bohrkrone ist zudem mit außenkalibererhaltenden Stiften ausgestattet und an ihrer Kronenschulter (Verjüngung zum Hangenden hin) ebenso mit Zähnen bestückt, um beim drehenden Ziehen des Bohrstranges das Bohrloch aufzuhonen zur Ermöglichung kleinräumiger Biegeradien und zur Entfernung von quellendem Gebirge und Nachfall.

Beim Überbohren der Erdwärmesonde 3 beziehungsweise des Sondenkörpers 30 kann diese z. B. stückweise gezogen werden. Hierfür kann der Sondenkörper 30 mit der Dämmerfüllung 32 und der eingebetteten Sondenleitung 31 an betreffenden Stellen abgedreht werden, indem die Zuführung der Spülflüssigkeit sowie die Vibration vorübergehend verringert oder abgestellt wird, so dass sich die Reibung des Bohrkerns an der Innenumfangsfläche des Bohrrohrs 110 und der Bohrkrone 12 erhöht und der Bohrkern mit dem Bohrgestänge vorübergehend mitdreht. Daraufhin kann das abgedrehte Stück, das z. B. einige Meter lang sein kann, gezogen werden.

Bei der Überbohrung des Sondenkörpers 30 mit der Bohrkrone 12 und dem anschließenden Bohrrohr 110 übergreift der betreffende Abschnitt des Bohrstrangs 13 den den verbleibenden Sondenkörper enthaltenden Bohrkern in Kontakt mit diesem oder in geringem Abstand von diesem, so dass das Bohrgestänge 11 mit dem Bohrrohr 110 entsprechend kleinkalibrig gehalten werden kann, wodurch die Flexibilität erhöht und damit die Nachführung des Bohrstrangs 13 verbessert wird.

Zum Rückbau der Erdwärmesonde 3 kann anschließend das Bohrloch mit geeignetem Füllmaterial in Abstimmung auf jeweilige Erdschichten aufgefüllt werden, wobei z. B. auch hydraulische Kurzschlüsse abgedichtet werden können.

## Patentansprüche

1. Verfahren, mit den ein Rückbau von Erdwärmesonden (3) durchgeführt wird und bei dem
- ein Sondenkörper (30) aus Sondenleitung (31) und verfestigter Dämmerfüllung (32) mittels einer Bohrvorrichtung (1) unter Zuführung von Spülflüssigkeit überbohrt wird, welche einen über einen Bohrkopf (10) rotierend vorgetriebenen Bohrstrang (13) mit einem rohrförmigen zylindrischen Bohrgestänge (11) und mit einer an dessen in Bohrrichtung liegendem Endbereich angebrachten Bohrkrone (12) umfasst,
- der mit der Bohrkrone (12) versehene endseitige Abschnitt (112) des Bohrstrangs (13) ohne oder in geringem Abstand von bis zu einigen Zentimetern, insbesondere 0 - 20 mm, von dem Sondenkörper (30) oder in Kontakt mit dem Sondenkörper (30) - diesen umfangsseitig in Richtung der momentanen Bohrachse zumindest teilweise übergreifend - rotierend vorgetrieben wird,
- die Bohrkrone (12) beim Bohren während der Rotation über das Bohrgestänge (11) in Bohrachsrichtung in Vibration versetzt wird und
- die Bohrkrone (12) dem Sondenkörper (30) über einen zumindest im unteren Bereich des Bohrgestänges (11) eingebundenen flexiblen Rohrabschnitt (111) nachgeführt wird.

2. Verfahren nach Anspruch 1,
**dadurch gekennzeichnet,**
**dass** die Vibrationsfrequenz im Bereich von 50 Hz bis 200 Hz liegt.

3. Verfahren nach einem der vorhergehenden Ansprüche,
**dadurch gekennzeichnet,**
**dass** die Rotationsgeschwindigkeit und die Vortriebskraft auf die Beschaffenheit des Sondenkörpers (30), insbesondere der Dämmerfüllung (32) und des Gebirges, abgestimmt sind.

4. Anwendung einer Bohrvorrichtung (1) beim Rückbau einer Erdwärmesonde (3), wobei die Bohrvorrichtung (1) mit einer Spüleinrichtung (4) versehen ist und einen Bohrkopf (10) mit einer Antriebsvorrichtung einschließlich Drehantrieb (100) und einen an diesen angeschlossenen Bohrstrang (13) aufweist, welcher ein rohrförmiges zylindrisches Bohrgestänge (11) und eine an dessen in Bohrrichtung gelegenen Endbereich angeschlossene Bohrkrone (12) umfasst,
**dadurch gekennzeichnet,**
**dass** der mit der Bohrkrone (12) versehene endseitige Abschnitt (112) des Bohrstrangs (13) in seinem Innenumfang so bemessen wird, dass der Außenumfang des Sondenkörpers (30) in Richtung der Bohrachse zumindest teilweise ohne oder in geringem Abstand von bis zu einigen Zentimetern übergriffen wird, dass die Antriebsvorrichtung zusätzlich einen Vibratorteil (101) aufweist, mittels dessen die Bohrkrone (12) während ihrer Rotation über das Bohrgestänge (11) mit in Richtung der Bohrachse wirkenden Vibrationen beaufschlagt wird, deren Vibrationsfrequenz im Bereich von 50 Hz bis 200 Hz liegt, und
**dass** das Bohrgestänge (11) zumindest in einem der Bohrkrone (12) zugekehrten Abschnitt mit einem flexiblen Rohrabschnitt (111) versehen ist, über den die Bohrkrone dem Sondenkörper (30) nachgeführt wird.

5. Anwendung der Bohrvorrichtung nach Anspruch 4,
**dadurch gekennzeichnet,**
**dass** der endseitige Abschnitt des Bohrstrangs (13), insbesondere die Bohrkrone (12), in Richtung der Bohrachse erweitert ist.

6. Anwendung der Bohrvorrichtung nach Anspruch 4 oder 5,
**dadurch gekennzeichnet,**
**dass** die Bohrkrone (12) stirnseitig und auf ihrer inneren Mantelfläche mit in Richtung der Bohrachse vorstehenden Bohrzähnen versehen ist.

7. Bohrvorrichtung (1) zum Überbohren von Erdwärmesonden mit einem Bohrkopf (10), der eine Antriebsvorrichtung mit einem Drehantrieb (100) aufweist, an den ein Bohrgestänge (12) eines Bohrstrangs (13) angeschlossen ist, welcher an seinem in Richtung der Bohrachse liegenden endseitigen Abschnitt mit einer Bohrkrone (12) versehen ist, und mit einer Spüleinrichtung (4) zum Austragen von Bohrklein und Unterstützung des Bohrprozesses, wobei der Sondenkörper (30) durch das Überbohren umfangsseitig in Richtung der momentanen Bohrachse übergriffen wird,
**dadurch gekennzeichnet,**
**dass** das Bohrgestänge (11) zumindest in einem der Bohrkrone (12) zugekehrten Abschnitt mit einem Rohrabschnitt (111) versehen ist, der zum passiven Nachführen bei der Überbohrung der Erdwärmesonde genügend flexibel ausgebildet ist und an dessen in Richtung der Bohrachse liegendem Endbereich die Bohrkrone (12) angeschlossen ist,
**dass** die Bohrkrone (2) in Richtung der Bohrachse nach unten radial erweitert ist und
**dass** die Antriebsvorrichtung mit einem Vibratorteil (101) versehen ist, über den der Bohrstrang (13) während seiner Rotation in Bohrachsrichtung in Vibration versetzbar ist.

8. Bohrvorrichtung (1) nach Anspruch 7,
**dadurch gekennzeichnet,**
**dass** die Innenumfangsfläche der Bohrkrone (12) mit in Bohrachsrichtung vorstehenden Bohrzähnen versehen ist.

## Claims

1. Method for dismantling geothermal probes (3), in which method
- a probe body (30) made up of a probe line (31) and solidified grouting (32) is overdrilled by means of a drill device (1) while flushing fluid is supplied, which drill device comprises a drill string (13), rotatingly driven forward via a drill head (10), with a tubular, cylindrical drill pipe (11) and with a core drill bit (12) attached to the region thereof located at the end in the drilling direction,
- the end portion (112), provided with the core drill bit (12), of the drill string (13) is rotatingly driven forward without a spacing or at a small spacing of up to a few centimeters, in particular 0 - 20 mm, from the probe body (30) or in contact with the probe body (30)-at least partially overlapping said probe body circumferentially in the direction of the current drilling axis,
- while drilling, the core drill bit (12) during rotation is made via the drill pipe (11) to vibrate in the drilling axis direction, and
- the core drill bit (12) is guided along the probe body (30) via a flexible tube portion (111) integrated at least in the lower region of the drill pipe (11).

2. Method according to claim 1,
**characterized**
**in that** the vibration frequency is in the range of 50 Hz to 200 Hz.

3. Method according to either of the preceding claims,
**characterized**
**in that** the rotational speed and the forward-driving force are matched to the nature of the probe body (30), in particular the grouting (32) and the rock mass.

4. Use of a drill device (1) when dismantling a geothermal probe (3), wherein the drill device (1) is provided with a flushing apparatus (4) and has a drill head (10) with a drive device including a rotary drive (100) and has a drill string (13) connected thereto which comprises a tubular, cylindrical drill pipe (11) and a core drill bit (12) connected to the region thereof located at the end in the drilling direction,
**characterized**
**in that** the inner circumference of the end portion (112), provided with the core drill bit (12), of the drill string (13) is dimensioned such that the outer circumference of the probe body (30) is at least partially overlapped in the direction of the drilling axis, without a spacing or at a small spacing of up to a few centimeters, in that the drive device additionally has a vibrator part (101) by means of which the core drill bit (12) during the rotation thereof is subjected via the drill pipe (11) to vibrations acting in the direction of the drilling axis, the vibration frequency of which vibrations is in the range of 50 Hz to 200 Hz, and
**in that** the drill pipe (11) at least in a portion facing the core drill bit (12) is provided with a flexible tube portion (111) via which the core drill bit is guided along the probe body (30).

5. Use of the drill device according to claim 4,
**characterized**
**in that** the end portion of the drill string (13), in particular the core drill bit (12), is widened in the direction of the drilling axis.

6. Use of the drill device according to claim 4 or 5,
**characterized**
**in that** the core drill bit (12) is provided on the end face and the inner lateral surface thereof with drill teeth projecting in the direction of the drilling axis.

7. Drill device (1) for overdrilling geothermal probes with a drill head (10) having a drive device with a rotary drive (100) to which a drill pipe (12) of a drill string (13) is connected which at the portion thereof located at the end in the direction of the drilling axis is provided with a core drill bit (12), and with a flushing apparatus (4) for discharging drill cuttings and supporting the drilling process, wherein the probe body (30) as a result of the overdrilling is overlapped circumferentially in the direction of the current drilling axis,
**characterized**
**in that** the drill pipe (11) at least in a portion facing the core drill bit (12) is provided with a tube portion (111) sufficiently flexible for passive guidance during the overdrilling of the geothermal probe and to the region of which located at the end in the direction of the drilling axis the core drill bit (12) is connected,
**in that** the core drill bit (2) is radially widened downward in the direction of the drilling axis, and
**in that** the drive device is provided with a vibrator part (101) via which the drill string (13) during the rotation thereof can be made to vibrate in the drilling axis direction.

8. Drill device (1) according to claim 7,
**characterized**
**in that** the inner circumferential surface of the core drill bit (12) is provided with drill teeth projecting in the drilling axis direction.

## Revendications

1. Procédé, avec lequel un démantèlement de sondes géothermiques (3) est mis en œuvre et dans lequel
- un corps de sonde (30) constitué d'une conduite de sonde (31) et d'une charge isolante (32) solidifiée est surforé au moyen d'un dispositif de forage (1) avec amenée de liquide de rinçage, lequel comprend un train de tige de forage (13) avancé en rotation par l'intermédiaire d'une tête de forage (10) et comportant une tige de forage (11) cylindrique tubulaire et comportant une couronne de forage (12) montée sur sa zone d'extrémité située dans le sens de forage,
- la section d'extrémité (112) du train de tige de forage (13) pourvue de la couronne de forage (12) est avancée en rotation sans ou à faible distance, pouvant aller jusqu'à quelques centimètres, en particulier de 0 à 20 mm, du corps de sonde (30), ou en contact avec le corps de sonde (30) en le recouvrant au moins partiellement côté circonférence dans la direction de l'axe de forage momentané,
- la couronne de forage (12), lors du forage, est mise en vibration dans le sens de l'axe de forage pendant la rotation sur la tige de forage (11), et
- la couronne de forage (12) suit le corps de sonde (30) par l'intermédiaire d'une section de tube (111) flexible intégrée au moins dans la zone inférieure de la tige de forage (11).

2. Procédé selon la revendication 1,
**caractérisé en ce**
**que** la fréquence de vibration se situe dans la plage allant de 50 Hz à 200 Hz.

3. Procédé selon l'une des revendications précédentes,
**caractérisé en ce**
**que** la vitesse de rotation et la force d'avancement sont adaptées à la nature du corps de sonde (30), en particulier de la charge isolante (32) et de la roche.

4. Utilisation d'un dispositif de forage (1) lors du démantèlement d'une sonde géothermique (3), dans laquelle le dispositif de forage (1) est pourvu d'un appareil de rinçage (4) et présente une tête de forage (10) comportant un dispositif d'entraînement comportant un entraînement rotatif (100), et un train de tige de forage (13) relié à celui-ci, lequel comprend une tige de forage (11) cylindrique tubulaire et une couronne de forage (12) reliée à sa zone d'extrémité orientée dans le sens de forage,
**caractérisée en ce**
**que** la section d'extrémité (112) du train de tige de forage (13) pourvu de la couronne de forage (12) est dimensionnée dans sa circonférence intérieure de telle sorte que la circonférence extérieure du corps de sonde (30) est recouvert dans la direction de l'axe de forage au moins partiellement sans ou à faible distance, pouvant aller jusqu'à quelques centimètres, que le dispositif d'entraînement présente en outre une partie vibrante (101), au moyen de laquelle la couronne de forage (12) est soumise, pendant sa rotation sur la tige de forage (11), à des vibrations agissant dans la direction de l'axe de forage, dont la fréquence de vibration se situe dans la plage allant de 50 Hz à 200 Hz, et
**que** la tige de forage (11) est pourvue, au moins dans une section tournée vers la couronne de forage (12), d'une section de tube (111) flexible par l'intermédiaire de laquelle la couronne de forage suit le corps de sonde (30).

5. Utilisation du dispositif de forage selon la revendication 4,
**caractérisée en ce**
**que** la section d'extrémité du train de tige de forage (13), en particulier la couronne de forage (12), est élargie dans la direction de l'axe de forage.

6. Utilisation du dispositif de forage selon la revendication 4 ou 5,
**caractérisée en ce**
**que** la couronne de forage (12) est pourvue, côté frontal et sur sa surface d'enveloppe intérieure, de dents de forage faisant saillie dans la direction de l'axe de forage.

7. Dispositif de forage (1) pour le surforage de sondes géothermiques comportant une tête de forage (10) qui présente un dispositif d'entraînement comportant un entraînement rotatif (100) auquel est reliée une tige de forage (12) d'un train de tige de forage (13) qui est pourvu d'une couronne de forage (12) sur sa section d'extrémité située dans la direction de l'axe de forage, et comportant un appareil de rinçage (4) pour l'évacuation de débris de forage et le soutien du processus de forage, dans lequel le corps de sonde (30) est recouvert côté circonférence dans la direction de l'axe de forage momentané par le surforage,
**caractérisé en ce**
**que** la tige de forage (11) est pourvue, au moins dans une section tournée vers la couronne de forage (12), d'une section de tube (111) qui est réalisée de manière suffisamment flexible pour permettre le suivi passif lors du surforage de la sonde géothermique et à laquelle la couronne de forage (12) est reliée au niveau de la zone d'extrémité située dans la direction de l'axe de forage,
**que** la couronne de forage (2) est élargie radialement vers le bas dans la direction de l'axe de forage, et
**que** le dispositif d'entraînement est pourvu d'une partie vibrante (101) par l'intermédiaire de laquelle le train de tige de forage (13) peut être mis en vibration pendant sa rotation dans la direction de l'axe de forage.

8. Dispositif de forage (1) selon la revendication 7,
**caractérisé en ce**
**que** la surface circonférentielle intérieure de la couronne de forage (12) est pourvue de dents de forage faisant saillie dans la direction de l'axe de forage.
